# EUROPÄISCHE PATENTSCHRIFT

(11) **EP 2 238 393 B1**
(45) Veröffentlichungstag und Bekanntmachung des Hinweises auf die Patenterteilung: **21.08.2013**
(21) Anmeldenummer: 08758964.4
(22) Anmeldetag: 03.06.2008
(51) Int. Cl.: F24J 2/52

(54) **SOLARMODUL-BEFESTIGUNGSSYSTEM**
SOLAR MODULE FASTENING SYSTEM
SYSTÈME DE FIXATION DE MODULES SOLAIRES

(30) Priorität: 25.01.2008 DE 102008006106
(43) Veröffentlichungstag der Anmeldung: 13.10.2010
(73) Patentinhaber: BayWa r.e. renewable energy GmbH, 80336 München (DE)
(72) Erfinder: LEITHOLD, Walter, 79114 Freiburg (DE); SIEBERT, Martin, 79115 Freiburg (DE)
(74) Vertreter: Schäfer, Matthias W.
(86) Internationale Anmeldenummer: PCT/EP2008/004399
(87) Internationale Veröffentlichungsnummer: WO 2009/092401

(56) Entgegenhaltungen:
- EP-A2- 1 496 550
- EP-A2- 1 798 776
- WO-A2-2006/101392
- WO-A2-2007/143983
- DE-A1- 19 529 351
- DE-U1- 20 303 471

## Beschreibung

Die Erfindung bezieht sich auf ein Solarmodul-Befestigungssystem mit einer Unterkonstruktion, auf der Solarmodule angeordnet sind, welche Unterkonstruktion wenigstens zwei Tragprofile trägt, die jeweils einen Halteflansch und einen Auflageflansch haben, wobei jedem Tragprofil ein an den Solarmodulen angeordnetes Gegenprofil zugeordnet ist, das einen- Ankerflansch hat, der in einer Eingriff-Stellung zwischen dem Halteflansch und dem Auflageflansch in das jeweilige Tragprofil eingreifen kann.

Solarmodul-Befestigungssysteme weisen häufig einen stationären oder beweglich gelagerten und als Unterkonstruktion dienenden Träger auf, um die Solarmodule, insbesondere Photovoltaik-Module, zur Sonneneinstrahlung geneigt zu montieren. Dabei sind an dem Gestell beispielsweise Profilschienen angeordnet, auf die die Solarmodule geschraubt werden.

Die Montage der Solarmodule ist dementsprechend aufwändig, da für jedes Solarmodul mehrere Schrauben angebracht werden müssen. Insbesondere rahmenlose Solarmodule müssen dazu erst mit anschraubbaren Halterungen versehen werden. Durch die zumeist punktuell angreifenden Halterungen entstehen Spannungen im Glas, die während der Montage oder im Anlagenbetrieb zu Rissen in dem Solarmodul führen können.

Aus der EP 1 798 776 A2 ist bereits ein Solarmodul-Befestigungssystem der eingangs erwähnten Art vorbekannt, das zur Befestigung gerahmter Solarmodule auf einer Unterkonstruktion bestimmt ist. An jedem Solarmodul sind dazu zwei Gegenprofile vorgesehen, die gegenüberliegende Solarmodul-Ränder des Solarmoduls umfassen. Jedem Gegenprofil ist ein mit der Unterkonstruktion verbundenes Tragprofil zugeordnet. Die Gegenprofile haben dazu einen nach außen vorstehenden Ankerflansch, der in einer Eingriff-Stellung in eine Ausnehmung eingreift, die zwischen einem Halteflansch und einem Auflageflansch des Tragprofils vorgesehen ist. Da die Solarmodule in dem durch die Gegenprofile gebildeten Rahmen gelagert sind und da die Gegenprofile nahezu spielfrei in die Tragprofile eingreifen, ist ein Austausch insbesondere eines einzelnen Solarmoduls nicht ohne größeren Aufwand und vor allem nicht werkzeuglos möglich, wenn dieses Solarmodul mitten in einer Reihe von übereinander angeordneten Solarmodulen angeordnet ist.

Aus der DE 203 10 760 U1 kennt man bereits ein Solarmodul-Befestigungssystem, das ebenfalls zur Befestigung gerahmter Solarmodule bestimmt ist. Um die Durchbiegung des Solarmoduls auch bei großen Flächen zu begrenzen und um die Bruchgefahr zu minimieren, ist in der DE 203 10 760 U1 vorgesehen, dass das Solarmodul innerhalb des Rahmens an ein oder mehreren Stellen abgestützt ist. Dazu können mit Abstand von zwei gegenüberliegenden Solarmodul-Rändern jeweils ein Montageelement am Rahmen befestigt sein, wobei diese Montageelemente das Solarmodul vorzugsweise über elastische Dichtungsprofile abstützen. Diese Montageelemente sind jedoch lediglich dazu bestimmt, das Solarmodul gegen sein Eigengewicht und äußerlich wirkende Drucklasten, z.B. aus Schneeauflage und Winddruck, abzustützen. Da die am Rahmen gehaltenen Montageelemente nicht mit der Unterkonstruktion verbunden sein müssen, sind diese Montageelemente demgegenüber nicht dazu bestimmt, insbesondere leichtgewichtigere Solarmodule gegen eine Sogwirkung des vorbeistreichenden Windes zu sichern.

Aus der DE 10 2005 058 065 A1 kennt man bereits einen verstellbaren Dachhaken, der zur Befestigung von Solarmodulen auf Schrägdächern bestimmt ist. Dieser vorbekannte Dachhaken weist eine Grundplatte auf, die unterhalb der Dachziegel am Dachsparren befestigt wird. Die Grundplatte weist mehrere, hintereinander angeordnete Verzahnungsstege auf, in welche die Gegenstege eines Hakens einsetzbar sind. Der Haken weist ein Winkelstück auf, an welchem das Solarmodul eingehakt und befestigt werden kann. Der vorbekannte Dachhaken stellt jedoch keine Unterkonstruktion dar, die ein Solarmodul zusätzlich auch abstützen könnte.

Aus der DE 100 17 502 A1 ist eine zur Befestigung von Solarmodulen bestimmte Unterkonstruktion vorbekannt, auf der die Solarmodule zunächst lose auf die Unterkonstruktion aufgelegt werden können, um daran anschließend durch Schraubverbindungen fixiert und fertig montiert zu werden. Dabei werden die Module mit einer Klammer in eine mit der Unterkonstruktion verbundene Montageschiene derart eingehängt, dass sie auch in unverschraubtem Zustand nicht abrutschen können. Da die am Solarmodul befestigten Klammern in die Unterkonstruktion lediglich eingehängt werden, erscheint diese Befestigung dennoch vergleichsweise instabil.

Aufgabe der Erfindung ist es daher, ein Solarmodul-Montagesystem der eingangs erwähnten Art zu schaffen, das eine einfache, schnelle und sichere Montage von rahmenlosen Solarmodulen ermöglicht und gleichzeitig eine bessere Abstützung dieser rahmenlosen Solarmodule erlaubt.

Diese Aufgabe wird dadurch gelöst, dass die Solarmodule rahmenlos ausgebildet sind, dass die Gegenprofile mit Abstand vom jeweiligen Solarmodul-Rand zur Abstützung nach innen versetzt an den Solarmodulen befestigt sind, und dass zur Verbindung der Profile zuerst eines der Gegenprofile in das entsprechende Tragprofil eingeführbar ist, um nach dem Absenken des zumindest einen weiteren Gegenprofils auf den Auflageflansch die Gegenprofile längs der Solarmodul-Ebene in die Eingriff-Stellung schieben zu können.

Dabei können die Gegenprofile beliebig auf der Rückseite des Solarmoduls angeordnet werden, so dass auch bei großen Solarmodulen eine statisch optimale Unterstützung gewährleistet werden kann.

Dadurch, dass das Gegenprofil in das Tragprofil einsetzbar ist, kann die Montage der Solarmodule schrauben- und werkzeuglos und damit schneller und einfacher erfolgen. Zudem besteht nicht die Gefahr der Spannungsrissbildung im Solarmodul, weshalb bei der Montage keine Bruchgefahr besteht und die Solarmodule sicher montiert werden können.

Die Profile können dabei etwa so ausgebildet sein, dass die Gegenprofile in die Tragprofile eingeschoben, eingehängt oder aufgesetzt werden. Dazu ist es vorteilhaft, wenn das Gegenprofil eine H-, T- oder C-Form aufweist. Das Tragprofil kann dabei die gleiche oder auch eine andere Form aufweisen als das Gegenprofil.

Eine Ausführung der Erfindung sieht vor, dass ein Solarmodul mit zwei Profilpaaren, gebildet aus jeweils einem Tragprofil und einem Gegenprofil, befestigt wird, wobei die Gegenprofile jeweils etwa 20% der Solarmodul-Länge vom Solarmodul-Rand nach innen versetzt angeordnet sind. Je nach Größe des Solarmoduls können auch andere Abstände sinnvoll sein um eine sichere Abstützung zu gewährleisten.

Unabhängig von der Position der beiden Profilpaare, können je nach Größe des Solarmoduls oder bei besonderen statischen Anforderungen zwischen den beiden Profilpaaren noch ein drittes Profilpaar, gegenbenenfalls auch noch weitere Profilpaare, vorgesehen werden. Die Abstände zwischen den einzelnen Profilpaaren können dabei vorzugsweise äquidistant gewählt werden, um eine gleichmäßige Lastverteilung zu erreichen.

Die Tragprofile können als durchgehende Profile ausgebildet sein und sich über die volle Breite eines Solarmoduls erstrecken. Es ist auch möglich, mehrere Solarmodule auf einem durchgehenden Tragprofil zu montieren. Die Tragprofile können jedoch auch als einzelne Profilabschnitte ausgeführt sein, wobei für ein Solarmodul beliebig viele Profilabschnitte verwendet werden können.

Davon unabhängig ist es möglich, die Gegenprofile durchgehend auszuführen, so dass ein Gegenprofil die Breite eines Solarmoduls aufweist. Die Gegenprofile können aber auch nur abschnittweise ausgeführt sein.

Eine weitere Ausführungsvariante sieht vor, auf einem durchgehenden oder abschnittweisen Gegenprofil mehrere Solarmodule zu befestigen. Dadurch ist es möglich, aus mehreren Solarmodulen zuerst eine Montageeinheit zu schaffen, die dann mit geringem Aufwand montiert werden kann.

Das erfindungsgemäße Montagesystem ist für rahmenlose Solarmodule vorgesehen. Die Gegenprofile können dabei bereits herstellerseitig montiert sein und sind direkt in die Tragprofile einsetzbar, so dass anwenderseitig keine weiteren Arbeiten an den Modulen durchgeführt werden müssen. Dadurch wird auch die Bruchgefahr der rahmenlosen Module reduziert und die Sicherheit bei der Montage sowie die Montagegeschwindigkeit erhöht.

Die Gegenprofile sind bevorzugt mit dem rahmenlosen Solarmodul verklebt, was bereits herstellerseitig oder auch durch den Anwender erfolgen kann. Durch die Verwendung von dauerelastischem Klebstoff kann gleichzeitig verhindert werden, dass temperaturbedingte mechanische Spannungen im Tragprofil auf das Glas des Solarmoduls übertragen werden.

Besonders vorteilhaft können die Profile so ausgebildet sein, dass ein im wesentlichen formschlüssiger Eingriff des Gegenprofils in das Tragprofil erfolgt. Insbesondere ist es möglich, dass das Gegenprofil in das Tragprofil einrastet. Dabei kann es zweckmäßig sein, wenn an den Profilen Rast- oder Sicherungselemente vorgesehen sind, die ein einfaches Herausheben der Solarmodule, insbesondere durch einen vom Wind verursachten Sog an der Oberseite der Solarmodule, aus den Profilen verhindern. Dadurch sind die Solarmodule auch mit minimalem Neigungswinkel, bis zu horizontal, montierbar.

Durch eine geeignete Ausformung der Profile ist es ebenfalls möglich, einen Höhenversatz zwischen Modulober- und Modulunterkante herzustellen, was für eine bessere Hinterlüftung sorgen oder aus ästhetischen Gründen erwünscht sein kann.

Durch die erfindungsgemäße Profil-in-Profil Montage ist es bei entsprechender Anordnung der rahmenlosen Solarmodule auf den Profilen möglich, eine aus mehreren Solarmodulen bestehende, durchgehende Fläche ohne sichtbare Zwischenräume zu schaffen.

Eine besonders zweckmäßige Ausgestaltung der Erfindung sieht eine Diebstahlssicherung vor, indem an der Einführseite der Tragprofile der Ausfahrweg blockiert wird.

Weitere vorteilhafte Ausgestaltungen und Merkmale der Erfindung ergeben sich aus den Unteransprüchen und den Ausführungsbeispielen, die nachfolgend anhand der Zeichnungen näher erläutert sind.

Es zeigen:
- Fig. 1: eine Querschnittansicht einer Solarmodul-Anordnung mit einer ersten Anordnung des erfindungsgemäßen Solarmodul-Befestigungssystems,
- Fig. 2: einen Querschnitt eines erfindungsgemäßen Tragprofils,
- Fig. 3: einen Querschnitt eines erfindungsgemäßen Gegenprofils, und
- Fig. 4: eine Querschnittansicht einer Solarmodul-Anordnung mit einer zweiten Anordnung des erfindungsgemäßen Solarmodul-Befestigungssystems-.

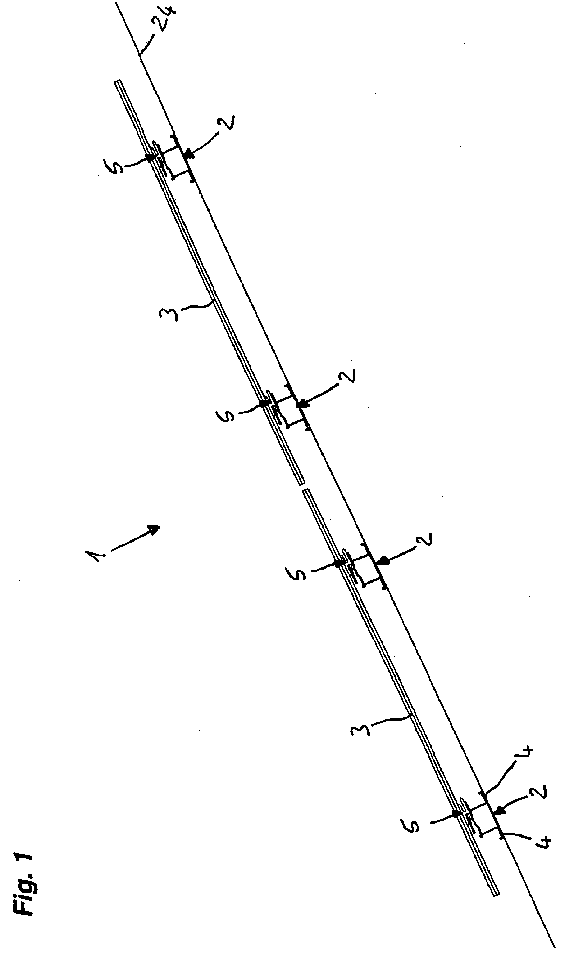

Figur 1 zeigt ein im Ganzen mit 1 bezeichnetes Solarmodul. Auf einer Unterkonstruktion 24, beispielsweise einer geneigten Ständerkonstruktion oder einem Gebäude-Dach, sind etwa H-förmige Tragprofile 2 zur Befestigung der Solarmodule 3 angeordnet. Die Tragprofile 2 weisen Befestigungsflansche 4 auf, an denen die Tragprofile 2 auf der Unterkonstruktion 24 befestigt sind, etwa durch Schrauben oder Nieten.

An den Solarmodulen 3 sind jeweils zwei etwa H-förmige Gegenprofile 5 zum Eingreifen in die entsprechenden Tragprofile 2 angeordnet. Die Gegenprofile 5 sind dabei etwa 20% der Solarmodul-Länge vom Rand nach innen versetzt befestigt.

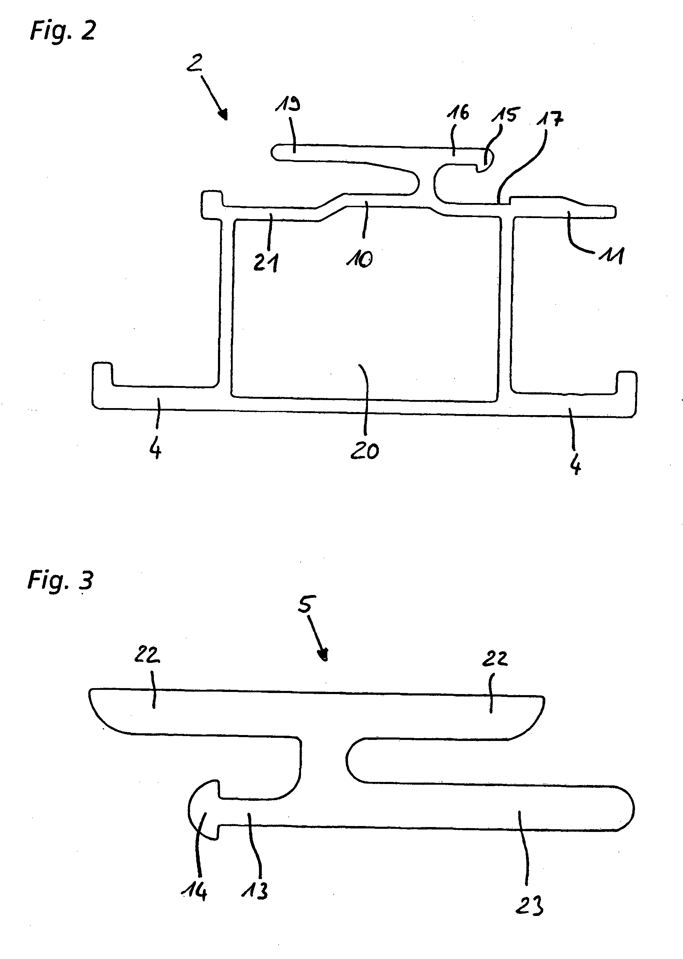

Die Gegenprofile 5 sind jeweils so angeordnet, dass das Solarmodul 3 einfach eingehängt werden kann. Dabei wird jeweils das Gegenprofil 5 mit seinem Ankerflansch 13 auf den Auflageflansch 11 des Tragprofils 2 aufgelegt und dann nach unten geschoben (Fig. 2 und 3). Der Ankerflansch 13 des Gegenprofils 5 weist eine ankerförmige Anformung 14 auf, die zusammen mit einer Haltenase 15 am Halteflansch 16 und einem Absatz 17 am Auflageflansch 11 des Tragprofils 2 eine im wesentlichen formschlüssige Verbindung der Profile 2, 5 bewirkt, so dass das Gegenprofil 5 beim Schieben des Solarmoduls 3 in eine Eingriffstellung in dem Tragprofil 2 einrastet.

Die Haltenase 15 verhindert dabei, dass das Solarmodul 3 aus dem Tragprofil 2 geschoben werden kann, nachdem es beispielsweise durch einen Windstoß angehoben wurde. Ebenso verhindert der Absatz 17, dass das Solarmodul 3 zurückgeschoben und ohne Widerstand aus dem Eingriff gehoben werden kann.

In Fig. 2 ist eine Ausführung eines erfindungsgemäßen Tragprofils 2 gezeigt. Das Tragprofil 2 ist im wesentlichen H-förmig ausgebildet und weist einen Einführflansch 19, einen Halteflansch 16 und zwei Auflageflansche 10, 11 auf. Das Tragprofil weist zudem eine rechteckige Hohlkammer 20 unter den Auflageflanschen 10, 11 auf und zwei Befestigungsflansche 4, die an der Begrenzungswand der Hohlkammer 20 angeordnet sind.

Der Einführflansch 19 ist an seinem Ende vollständig abgerundet und im Vergleich zum Halteflansch 16 länger ausgebildet, im gezeigten Beispiel etwa dreimal so lange. Der Halteflansch 16 weist eine nach innen gerichtete Haltenase 15 auf, die ebenfalls am Ende abgerundet ist. Der Auflageflansch 10 auf der Einführflansch-Seite des Tragprofils 2 weist eine Einführvertiefung 21 auf, die zum schrägen Einführen eines Gegenprofils 5 notwendig ist. Der andere Auflageflansch 11 weist etwa auf der Höhe der Haltenase 15 einen Absatz 17 auf, der zusammen mit der Haltenase 15 ein im wesentlichen formschlüssiges Einrasten eines Gegenprofils 5 ermöglicht.

Die Befestigungsflansche 4 sind zur Befestigung des Tragprofils 2 auf einer Unterkonstruktion 24 vorgesehen. Dabei sind dem Fachmann mehrere Befestigungsarten bekannt, die neben Schrauben, Nieten oder Schweißen je nach Anforderung und Material ausgewählt werden können. Bei einer kompakteren Ausführung des erfindungsgemäßen Tragprofils ohne Hohlkammer 20 kann die Befestigung auch an den Auflageflanschen 10, 11 erfolgen.

Das in Fig. 3 gezeigte Gegenprofil 5 ist ebenfalls im wesentlichen H-förmig ausgebildet und weist zwei Klebeflansche 22 auf, die zum Befestigen des Gegenprofils 5 an einem Solarmodul 2 vorgesehen sind und an ihrer Innenkante abgerundet sind. Weiterhin weist das Gegenprofil 5 einen Ankerflansch 13 auf, an dem eine ankerförmige Anformung 14 zum Eingriff in den Halteflansch 16 eines Tragprofils 2 vorgesehen ist, wobei der Ankerflansch 13 kürzer ist als die Klebeflansche 22. Der Einführflansch 23 des Gegenprofils 5 ist hingegen länger als die anderen Gegenprofil-Flansche 13, 22 und an seinem Ende vollständig abgerundet.

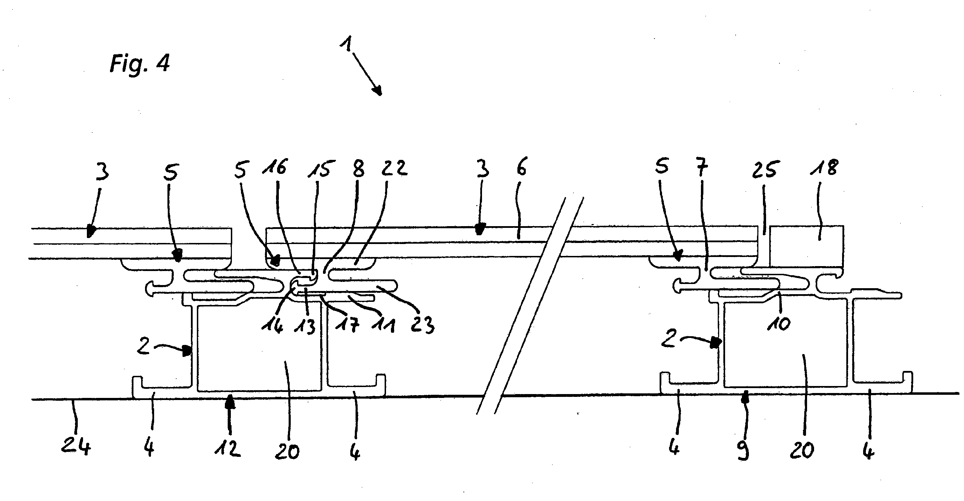

Die in Fig. 4 gezeigte Solarmodulanordnung unterscheidet sich von der in Fig. 1 gezeigten dadurch, dass die Tragprofile im wesentlichen zwischen jeweils zwei Solarmodulen angeordnet sind, so dass in das H-förmige Tragprofil beidseitig je ein Gegenprofil eingesetzt wird.

Das Solarmodul 6 mit den Gegenprofilen 7, 8 wird bei der Montage von oben, leicht schräg zuerst mit dem im Bild rechts am Solarmodul befindlichen Gegenprofil 7 in das entsprechende Tragprofil 9 eingeführt. Das im Bild links am Solarmodul befindliche Gegenprofil 8 wird dann abgesenkt, so dass die Gegenprofile 7, 8 auf den Auflageflanschen 10, 11 der Tragprofile 9, 12 aufliegen. Das Solarmodul 6 mit den Gegenprofile 7, 8 wird danach längs der Solarmodulebene in Richtung des zweiten Tragprofils 12 in eine Eingriff-Stellung geschoben, in der die ankerförmige Anformung 14 des Ankerflansches 13 etwa formschlüssig in den Halteflansch 16 eingreift, wobei die Haltenase 15 ein einfaches ausgleiten aus der Eingriff-Stellung verhindert.

Das zweite Solarmodul 3 wird entsprechend der in Fig. 1 gezeigten Ausführung eingehängt.

Abweichend von den gezeigten Ausführungsbeispielen sind für das erfindungsgemäße Montagesystem auch andere Profilformen denkbar, die einen im wesentlichen formschlüssigen Eingriff der Gegenprofile in die Tragprofile ermöglichen.

Anstelle der H-förmigen Profile sind daher auch T- oder C-förmige Profile denkbar, wobei für die Trag- und Gegenprofile auch unterschiedliche Profilformen vorgesehen sein können, solange entsprechende Rast- oder Sicherungselemente zum formschlüssigen Eingreifen oder Einrasten vorhanden sind.

## Patentansprüche

1. Solarmodul-Befestigungssystem mit einer Unterkonstruktion (24), auf der Solarmodule (3) angeordnet sind, welche Unterkonstruktion (24) wenigstens zwei Tragprofile (2) trägt, die jeweils einen Halteflansch (16) und einen Auflageflansch (11) haben, wobei jedem Tragprofil (2) ein an den Solarmodulen (3) angeordnetes Gegenprofil (5) zugeordnet ist, das einen Ankerflansch (13) hat, der in einer Eingriff-Stellung zwischen den Halteflansch (16) und den Auflageflansch (11) in das jeweilige Tragprofil (2) eingreifen kann, **dadurch gekennzeichnet, dass** die Solarmodule (3) rahmenlos ausgebildet sind, dass die Gegenprofile (5) mit Abstand vom jeweiligen Solarmodul-Rand zur Abstützung nach innen versetzt an den Solarmodulen (3) befestigt sind, und dass zur Verbindung der Profile (2, 5) zuerst eines der Gegenprofile (5) in das entsprechende Tragprofil (2) eingeführbar ist, um nach dem Absenken des zumindest einen weiteren Gegenprofils (5) auf den Auflageflansch (11) die Gegenprofile (5) längs der solarmodul-Ebene in die Eingriff-Stellung schieben zu können.

2. Solarmodul-Befestigungssystem nach Anspruch 1, **dadurch gekennzeichnet, dass** das Gegenprofil (5) formschlüssig in das Tragprofil (2) einsetzbar ist.

3. Solarmodul-Befestigungssystem nach Anspruch 2, **dadurch gekennzeichnet, dass** an den Profilen (2, 5) Rast- oder Sicherungselemente (14, 15, 17) vorgesehen sind.

4. Solarmodul-Befestigungssystem nach einem der Ansprüche 1 bis 3, **dadurch gekennzeichnet, dass** die Gegenprofile (5) eine H-, T- oder C-Form aufweisen.

5. Solarmodul-Befestigungssystem nach einem der Ansprüche, 1 bis 4, **dadurch gekennzeichnet, dass** die wenigstens zwei Tragprofile (2) eine H-, T- oder C-Form aufweisen.

6. Solarmodul-Befestigungssystem nach einem der Ansprüche, 1 bis 5, **dadurch gekennzeichnet, dass** die wenigstens zwei Tragprofile (2) als durchgehende Profilschiene ausgebildet sind.

7. Solarmodul-Befestigungssystem nach einem der Ansprüche, 1 bis 5, **dadurch gekennzeichnet, dass** die wenigstens zwei Tragprofile (2) als einzelne Profilabschnitte ausgeführt sind.

8. Solarmodul-Befestigungssystem nach einem der Ansprüche 1 bis 7, **dadurch gekennzeichnet, dass** die Gegenprofile (5) als durchgehende Profilschiene ausgebildet sind.

9. Solarmodul-Befestigungssystem nach einem der Ansprüche 1 bis 7, **dadurch gekennzeichnet, dass** die Gegenprofile (5) als einzelne Profilabschnitte ausgeführt sind.

10. Solarmodul-Befestigungssystem nach einem der Ansprüche 1 bis 9, **dadurch gekennzeichnet, dass** mehrere Solarmodule (3) mittels wenigstens zwei Gegenprofilen (5) zu einer Solarmodul-Montageeinheit zusammengefasst sind.

11. Solarmodul-Befestigungssystem nach einem der Ansprüche 1 bis 10, **dadurch gekennzeichnet, dass** pro Solarmodul (3) zwei Profilpaare aus jeweils einem Tragprofil (2) und einem Gegenprofil (5) vorgesehen sind und die Gegenprofile etwa 20% der Solarmodul-Länge vom Rand nach innen versetzt angeordnet sind.

12. Solarmodul-Befestigungssystem nach Anspruch 11, **dadurch gekennzeichnet, dass** wenigstens ein zusätzliches Profilpaar als Mittelstütze zwischen den zwei Profilpaaren vorgesehen ist.

13. Solarmodul-Befestigungssystem nach einem der Ansprüche 1 bis 12, **dadurch gekennzeichnet, dass** die Gegenprofile (5) herstellerseitig anden Solarmodulen (3) befestigt sind.

14. Solarmodul-Befestigungssystem nach einem der Ansprüche 1 bis 13, **dadurch gekennzeichnet, dass** die Gegenprofile (5) auf den Solarmodulen (3) geklebt sind.

15. Solarmodul-Befestigungssystem nach Anspruch 14, **dadurch gekennzeichnet, dass** die Gegenprofile (5) auf den Solarmodulen (3) mittels eines Klebstoffs geklebt sind.

16. Solarmodul-Befestigungssystem nach einem der Ansprüche 1 bis 15, **dadurch gekennzeichnet, dass** die wenigstens zwei Tragprofile (2) und/oder die Gegenprofile (5) aus Aluminium gefertigt sind.

17. Solarmodul-Befestigungssystem nach einem der Ansprüche 1 bis 16, **dadurch gekennzeichnet, dass** die wenigstens zwei Tragprofile je (2) wenigstens einen Befestigungsflansch (4) oder eine Befestigungsnut zur Montage auf der Unterkonstruktion (24) aufweisen.

## Claims

1. Solar module fastening system comprising a substructure (24) on which solar modules (3) are arranged, which substructure (24) bears at least two carrier profiles (2) which each have a retaining flange (16) and a support flange (11), wherein each carrier profile (2) is assigned a counter-profile (5) which is arranged on the solar modules (3) and which has an anchor flange (13) which can engage in the respective carrier profile (2) in an engagement position between the retaining flange (16) and the support flange (11), **characterized in that** the solar modules (3) have a frameless design, **in that** the counter-profiles (5) are fastened to the solar modules (3) while being offset inwardly for support purposes at a distance from the respective solar module edge, and **in that**, in order to connect the profiles (2, 5), at first one of the counter-profiles (5) can be introduced into the corresponding carrier profile (2) so that, after lowering the at least one further counter-profile (5) onto the support flange (11), the counter-profiles (5) can be pushed along the solar module plane into the engagement position.

2. Solar module fastening system according to Claim 1, **characterized in that** the counter-profile (5) can be inserted into the carrier profile (2) in a form-fitting manner.

3. Solar module fastening system according to Claim 2, **characterized in that** latching or securing elements (14, 15, 17) are provided on the profiles (2, 5).

4. Solar module fastening system according to one of Claims 1 to 3, **characterized in that** the counter-profiles (5) have an H, T or C shape.

5. Solar module fastening system according to one of Claims 1 to 4, **characterized in that** the at least two carrier profiles (2) have an H, T or C shape.

6. Solar module fastening system according to one of Claims 1 to 5, **characterized in that** the at least two carrier profiles (2) are designed as a continuous profiled rail.

7. Solar module fastening system according to one of Claims 1 to 5, **characterized in that** the at least two carrier profiles (2) are designed as individual profiled portions.

8. Solar module fastening system according to one of Claims 1 to 7, **characterized in that** the counter-profiles (5) are designed as a continuous profiled rail.

9. Solar module fastening system according to one of Claims 1 to 7, **characterized in that** the counter-profiles (5) are designed as individual profiled portions.

10. Solar module fastening system according to one of Claims 1 to 9, **characterized in that** a plurality of solar modules (3) are combined to form a solar module assembly unit by means of at least two counter-profiles (5).

11. Solar module fastening system according to one of Claims 1 to 10, **characterized in that** two profiled pairs in each case consisting of a carrier profile (2) and a counter-profile (5) are provided for each solar module (3), and the counter-profiles are arranged inwardly offset from the edge by approximately 20% of the solar module length.

12. Solar module fastening system according to Claim 11, **characterized in that** at least one additional profile pair is provided as central support between the two profile pairs.

13. Solar module fastening system according to one of Claims 1 to 12, **characterized in that** the counter-profiles (5) are fastened to the solar modules (3) by the manufacturer.

14. Solar module fastening system according to one of Claims 1 to 13, **characterized in that** the counter-profiles (5) are adhesively bonded to the solar modules (3).

15. Solar module fastening system according to Claim 14, **characterized in that** the counter-profiles (5) are adhesively bonded to the solar modules (3) by means of an adhesive.

16. Solar module fastening system according to one of Claims 1 to 15, **characterized in that** the at least two carrier profiles (2) and/or the counter-profiles (5) are manufactured from aluminium.

17. Solar module fastening system according to one of Claims 1 to 16, **characterized in that** the at least two carrier profiles (2) each have at least one fastening flange (4) or a fastening groove for mounting on the substructure (24).

## Revendications

1. Système de fixation de modules solaires, avec une structure porteuse (24) sur laquelle sont disposés des modules solaires (3), laquelle structure porteuse (24) porte au moins deux profilés supports (2) qui possèdent chacun une aile de retenue (16) et une aile d'appui (11), sachant qu'à chaque profilé support (2) est associé un contre-profilé (5), qui est disposé sur les modules solaires (3) et qui possède une aile d'ancrage (13) qui peut, dans une position d'engagement, s'engager dans le profilé support respectif (2) entre l'aile de retenue (16) et l'aile d'appui (11),
**caractérisé en ce que** les modules solaires (3) sont réalisés sans cadre, **en ce que** les contre-profilés (5) sont fixés sur les modules solaires (3) en étant, à des fins de soutien, décalés vers l'intérieur à distance du bord respectif de module solaire, et **en ce que**, pour assembler les profilés (2, 5), un des contre-profilés (5) peut d'abord être introduit dans le profilé support correspondant (2), afin de pouvoir, à la suite de l'abaissement du contre-profilé supplémentaire au moins unique (5) sur l'aile d'appui (11), pousser dans le sens de la longueur du plan des modules solaires les contre-profilés (5) dans la position d'engagement.

2. Système de fixation de modules solaires selon la revendication 1, **caractérisé en ce que** le contre-profilé (5) peut être inséré en engagement positif dans le profilé support (2).

3. Système de fixation de modules solaires selon la revendication 2, **caractérisé en ce que** des éléments d'enclenchement ou de blocage (14, 15, 17) sont prévus sur les profilés (2, 5).

4. Système de fixation de modules solaires selon l'une des revendications 1 à 3, **caractérisé en ce que** les contre-profilés (5) présentent une forme de H, de T ou de C.

5. Système de fixation de modules solaires selon l'une des revendications 1 à 4, **caractérisé en ce que** les au moins deux profilés supports (2) présentent une forme de H, de T ou de C.

6. Système de fixation de modules solaires selon l'une des revendications 1 à 5, **caractérisé en ce que** les au moins deux profilés supports (2) sont réalisés sous la forme d'une barre profilée continue.

7. Système de fixation de modules solaires selon l'une des revendications 1 à 5, **caractérisé en ce que** les au moins deux profilés supports (2) sont réalisés sous la forme de tronçons individuels de profilé.

8. Système de fixation de modules solaires selon l'une des revendications 1 à 7, **caractérisé en ce que** les contre-profilés (5) sont réalisés sous la forme d'une barre profilée continue.

9. Système de fixation de modules solaires selon l'une des revendications 1 à 7, **caractérisé en ce que** les contre-profilés (5) sont réalisés sous la forme de tronçons individuels de profilé.

10. Système de fixation de modules solaires selon l'une des revendications 1 à 9, **caractérisé en ce que** plusieurs modules solaires (3) sont réunis en un ensemble monté de modules solaires au moyen d'au moins deux contre-profilés (5).

11. Système de fixation de modules solaires selon l'une des revendications 1 à 10, **caractérisé en ce qu'**il est prévu pour chaque module solaire (3) deux paires de profilés constituées chacune d'un profilé support (2) et d'un contre-profilé (5), et les contre-profilés sont disposés en étant décalés vers l'intérieur d'environ 20 % de la longueur du modulaire solaire par rapport au bord.

12. Système de fixation de modules solaires selon la revendication 11, **caractérisé en ce qu'**il est prévu au moins une paire supplémentaire de profilés comme soutien central entre les deux paires de profilés.

13. Système de fixation de modules solaires selon l'une des revendications 1 à 12, **caractérisé en ce que** les contre-profilés (5) sont fixés sur les modules solaires (3) par le fabricant.

14. Système de fixation de modules solaires selon l'une des revendications 1 à 13, **caractérisé en ce que** les contre-profilés (5) sont collés sur les modules solaires (3).

15. Système de fixation de modules solaires selon la revendication 14, **caractérisé en ce que** les contre-profilés (5) sont collés sur les modules solaires (3) au moyen d'un produit adhésif.

16. Système de fixation de modules solaires selon l'une des revendications 1 à 15, **caractérisé en ce que** les au moins deux profilés supports (2) et/ou les contre-profilés (5) sont fabriqués en aluminium.

17. Système de fixation de modules solaires selon l'une des revendications 1 à 16, **caractérisé en ce que** les au moins deux profilés supports (2) présentent au moins une aile de fixation (4) ou une rainure de fixation pour le montage sur la structure porteuse (24).
